# EUROPEAN PATENT APPLICATION

(11) **EP 4 787 566 A1**
(43) Date of publication of application: **05.08.2026**
(21) Application number: 25155284.0
(22) Date of filing: 31.01.2025
(51) Int. Cl.: H01M 50/20, H01M 50/30

(54) **FILTER DEVICE AND HOUSING OF BATTERY WITH FILTER DEVICE**

(71) Applicant: MANN+HUMMEL GmbH, 71636 Ludwigsburg (DE)
(72) Inventor: ZBIRAL, Robert, 71636 Ludwigsburg (DE); EVLEKLI, Coskun, 71636 Ludwigsburg (DE)
(74) Representative: Mann + Hummel Intellectual Property

(57) **Abstract**

A filter device (200) for filtering a fluid stream of a housing (60) of a battery, in particular of a traction battery of a motor vehicle, comprises a cover element (100) comprising a base section (110), a top section (150), and a fluid permeable fluid passage (22) for venting, the cover element (100) comprising an open end (112) at a free end (114) of the base section (110) and a closed end (156) at a free end (158) of the top section (150), and the base section (110) being connected to the top section (150), in particular being integral with the top section (150). The filter device (200) further comprises a filter arrangement (130) arranged between the free end (114) of the base section (110) and the free end (158) of the top section (150), and at least one pressure relief valve (160) arranged on the top section (150) and in an intended fluid flow direction (20) downstream of the filter arrangement (130). The filter arrangement (130) comprises a filter element (132) and a particle separator (134) arranged upstream of the filter element (132) in the intended fluid flow direction (20).

## Description

### Technical Field

Embodiments relate to a filter device for filtering a fluid stream of a housing of a battery, in particular of a traction battery of a motor vehicle, as well as a housing of a battery, in particular of a traction battery of a motor vehicle, with a filter device.

### Background Art

Battery electric storage systems used as stationary systems or as traction batteries for vehicles contain a certain number of battery cells.

In the event of a malfunction hot gases and particles may escape from the battery cells.

To protect people from dangerous fumes and gases that may occur during thermal runaway of at least one battery cell, venting must be possible, in order to drain the gas to the environment. Further, also in case of cell malfunction, the rechargeable battery requires a housing that is mechanically strong and sealed against the environment. However, it is required to implement an opening in the battery module housing for the purpose of venting, which means safe drainage of gases to the environment.

Further, to prevent the housing of the battery and sealings used in the housing from damage due to increased pressure, for example as a result of gas development or temperature changes, breathing must be enabled. This means, gas needs to be drained safely from the housing, if increased pressure occurs. Further, during normal function of the cells, the opening has to be protected against intrusion of dust, particles, other impurities and the like. This is normally achieved by filter elements, such as membranes.

WO 2019/151627 A1 describes a venting device for a housing of a battery, comprising at least a first connection element with a first fluid guiding portion and a first thread element for connecting the venting device with the housing, a first sealing element, and a first filter element arranged in the first fluid guiding portion. The venting device is adapted to be sealed against the housing by the first sealing element, if the first connection element is screwed together with the housing.

CN 218901206 U describes a flue gas filter device with an anti-explosion valve. The flue gas filter device comprises a filter cylinder and a filter screen assembly. The filter cylinder is of a hollow cavity structure with openings in the two ends. The filter cylinder is provided with a flue gas filter channel, and the flue gas filter channel linearly extends along the axis of the filter cylinder. The filter screen assembly is accommodated in the hollow cavity of the filter cylinder and shields the flue gas filter channel.

Thus, state of the art is a tight sealed housing of the battery with a pressure equalization element to compensate pressure differences during normal operating conditions. If overpressure occurs due to a malfunction, it has to be reduced in the most effective way possible, i.e. by burst discs, reversible and irreversible opening pressure relief valves.

### Summary

It is an object of the embodiments to provide an improved filter device for filtering a fluid stream of a housing of a battery, in particular of a traction battery of a motor vehicle.

Another object is to provide a housing of a battery, in particular of a traction battery of a motor vehicle, with a filter device.

According to an aspect of the embodiments the object is achieved by a filter device for filtering a fluid stream of a housing of a battery, in particular of a traction battery of a motor vehicle, the filter device comprising a cover element comprising a base section, a top section, and a fluid permeable fluid passage for venting, the cover element comprising an open end at a free end of the base section and a closed end at a free end of the top section, and the base section being connected to the top section, in particular being integral with the top section. The filter device further comprises a filter arrangement arranged between the free end of the base section and the free end of the top section, and at least one pressure relief valve arranged on the top section and in an intended fluid flow direction downstream of the filter arrangement. The filter arrangement comprises a filter element and a particle separator arranged upstream of the filter element in the intended fluid flow direction.

According to a further aspect of the embodiments the another object is achieved by a housing of a battery, in particular of a traction battery of a motor vehicle, the housing comprising the filter device, and at least one first opening, wherein the open end of the cover element of the filter device is mounted in a substantially fluid tight manner to the at least one opening.

Advantageous embodiments are described in the dependent claims, the description and the drawings.

The proposed filter device for filtering gases and particles comprises a filter arrangement and a tight closed outlet, wherein the outlet is tightly sealed with a pressure relief valve, which may be closed by a spring, or with a gas tight burstable membrane that opens at a defined pressure if an overpressure occurs due to a malfunction inside the housing of the battery. The opening system can be monitored by electronic devices and/or sensors.

The cover element provides a housing for the filter arrangement and the pressure relief valve.

The filter arrangement comprises a filter element that can be a flat, folded or pleated filter, which is designed to be gas-tight on its interfaces, so that when the filter device is open, the gas must flow through the filter element. Advantageously, the filter element may be a folded medium. Furthermore, the filter element can be stabilized against the exhausting gas by means of a corresponding support element.

The main function of the filter element is to capture fine thereby harmful and hazardous particles and/or gases caused by a malfunction of at least one battery cell inside the housing of the battery. So the fine dust depth filter serves to effectively prevent this and keep the fine particles inside the filter element and thus in the interior of a housing of the battery. Due to the high temperatures of the fluid stream, which may be equal to or greater than 200°C, the filter element itself is made of an adequate heat resistance material, as glass, metal, ceramics, or a combination of these materials. The filter medium can have a single-layer structure or a multi-layer structure. It can be a plane element or can be pleated to enlarge the surface. In order to fulfil its function, it may be present in a sufficiently gas-permeable form as fibers, nonwoven materials, fabrics, needle mats, foams, porous or microporous structures. Advantageously, a pollution of the environment after malfunction of at least one battery cell of the battery electric storage system may be avoided.

The filter element is protected by an upstream coarse particle separator as a further part of the filter arrangement. The particle separator is configured with a separation screen arranged across the fluid passage through the base body, wherein screen openings of the separation screen engage across the fluid passage. The particle separator may be made of a geometrically simple contour, preferably a flat, folded or pleated design. The separation screen advantageously serves for preventing particles to enter the fluid passage. Thus, a lifetime of the filter element may be prolonged.

The inlet of the filter device is equipped with a fixable and sealable interface for connection directly with the sealed housing of the battery.

After the pressure relief valve of the filter device actuated by a spring has opened by overpressure, it will be closed again, according to a pressure difference between the housing and the outside. The pressure relief valve opened by a bursting gastight membrane remains in a condition that is no longer tight at the flow outlet even after the overpressure has been reduced. This means that this process is irreversible and therefore not repeatable.

The cover element may be configured to accommodate a seat for a circumferential extending sealing element of the filter device.

According to a favorable embodiment of the filter device, the cover element may further comprise a shoulder directly or indirectly supporting a sealing element for sealing the filter element. Thus, the streaming fluid may be forced to pass the filter element which is tightly sealed against the cover element.

According to a favorable embodiment of the filter device, the filter device may further comprise a support element that comprises a seat for the filter element. The filter element may be connected to the support element by the sealing element and/or another functional element of the filter element for stabilization, for example an integrated grid. The filter device may further comprise a circumferential ring element, and the sealing element may be arranged between the circumferential ring element and the shoulder that compress the sealing element. These measures ensure a suitable stability of the filter element against a load caused by a pressure peak during a malfunction of at least one battery cell. This also ensures that the particles and/or the gases cannot bypass the filter. Advantageously, this sealing element can be installed in an area that does not come into direct contact with the hot fluid stream. The sealing element can be made of an elastomer, or a thermoplastic elastomer, or a thermoplastic material. The thermoplastic material may be realized by a plastic overmolded filter element. This requires an additional gasket.

It may also be necessary to support the filter element at the downstream side against the fluid flow. This support element advantageously may be made of an adequate heat resistant material as a high performance plastic or metal. It can be spaced at a sufficiently small distance from the filter element or can be completely or locally in direct contact with the filter element itself and/or with at least one stabilizing element of the filter element. Further, the support element can have an interface to the sealing element of the filter element. Advantageously, an intermediate plate may be used to optimize the needed compression of the circumferential sealing element.

According to a favorable embodiment of the filter device, the top section may comprise at least one fluid outlet, and the at least one pressure relief valve may be mounted at the at least one fluid outlet and may be configured to open the fluid passage in the intended fluid flow direction when a predetermined excess pressure in the housing of the battery is reached or exceeded. In particular, the pressure relief valve may be sealed against the top section by a circumferential sealing element. Thus, the filtered fluid stream may exit to the environment without any harmful particles.

According to a favorable embodiment of the filter device, the at least one pressure relief valve may comprise an airtight membrane and a membrane rupture device, the airtight membrane being configured to burst by interaction with the membrane rupture device when the predetermined excess pressure in the housing of the battery is reached or exceeded. The membrane is pressed by the fluid pressure against the rupture device, e.g. a spike element, and be ruptured, thus opening the fluid path to the environment.

The airtight membrane may be provided in the form of a microporous film, comprising in particular a fluoropolymer, in particular a polytetrafluoroethylene.

According to a favorable embodiment of the filter device, the base section may comprise a fluid inlet in an axial direction, and the particle separator may comprise screen openings arranged across the fluid inlet. The particle separator comprises a separation screen and advantageously serves for preventing particles to enter the fluid passage. Thus, a lifetime of the filter element may be prolonged.

According to a favorable embodiment of the filter device, the at least one pressure valve may comprise two pressure relief valves, intended fluid flow directions of the two pressure relief valves being inclined against each other. The top section may comprise two regions being inclined against each other. One of the two pressure relief valves may be arranged at each of the two regions. In such a configuration very efficient venting may be achieved with a higher venting cross section.

According to a favorable embodiment of the filter device, the base section may comprise a circumferential rim that is a seat for a sealing element to be arranged circumferentially between the circumferential rim and the housing of the battery in an intended mounting state of the filter device. By this way, the base body may be mounted to an opening of a housing in a substantially fluid tight manner providing a fluid permeable fluid passage for venting.

The proposed housing of a battery comprises a filter device for filtering gases and particles comprising a filter arrangement and a tight closed outlet, wherein the outlet is tightly sealed with a gas tight burstable membrane that opens at a defined pressure if an overpressure occurs due to a malfunction inside the housing of the battery. The opening system can be monitored by electronic devices and/or sensors.

The filter arrangement comprises a filter element that can be a flat, folded or pleated filter, which is designed to be gas-tight on its interfaces, so that when the filter device is open, the gas must flow through the filter element. Advantageously, the filter element may be a folded medium. Furthermore, the filter element can be stabilized against the exhausting gas by means of integrated stabilizing elements and/or a corresponding support element.

The main function of the filter element is to capture fine thereby harmful and hazardous particles and/or gases caused by a malfunction of at least one battery cell inside the housing of the battery. So the fine dust depth filter serves to effectively prevent this and keep the fine particles inside the filter element and thus in the interior of a housing of the battery. Due to the high temperatures of the fluid stream, which may be equal to or greater than 200°C, the filter element itself is made of an adequate heat resistance material, as glass, metal, ceramics, or a combination of these materials. The filter medium can have a single-layer structure or a multi-layer structure. It can be a plane element or can be pleated to enlarge the surface. In order to fulfil its function, it may be present in a sufficiently gas-permeable form as fibers, nonwoven materials, fabrics, needle mats, foams, porous or microporous structures. Advantageously, a pollution of the environment after malfunction of at least one battery cell of the battery electric storage system may be avoided.

The filter element is protected by an upstream coarse particle separator as a further part of the filter arrangement. The particle separator is configured with a separation screen arranged across the fluid passage through the base body, wherein screen openings of the separation screen engage across the fluid passage. The particle separator may be made of a geometrically simple contour, preferably a flat, folded or pleated design. The separation screen advantageously serves for preventing particles to enter the fluid passage. Thus, a lifetime of the filter element may be prolonged.

The inlet of the filter device is equipped with a fixable and sealable interface for connection directly with the sealed housing of the battery.

After the pressure relief valve of the filter device actuated by a spring has opened by overpressure, it will be closed again, according to a pressure difference between the housing and the outside. The pressure relief valve opened by a bursting gastight membrane remains in a condition that is no longer tight at the flow outlet even after the overpressure has been reduced. This means that this process is irreversible and therefore not repeatable.

According to a favorable embodiment of the housing, the cover element may be attached to an outside of the housing. Thus, there is no extra space needed inside the housing of the battery for the components of the filter device.

According to a favorable embodiment of the housing, the housing may further comprise a second opening. An overpressure valve may be arranged at the second opening and may be configured to open at a higher pressure level than the at least one pressure relief valve of the filter device to provide a bypass fluid flow path from an interior of the housing of the battery to an environment, the bypass fluid flow path bypassing at least the filter arrangement. Thus, in an advantageous embodiment the sealed housing of the battery may be furthermore equipped with a state of the art overpressure valve as bypass if the filter device is blocked.

According to a favorable embodiment of the housing, the housing may further comprise at least one third opening, wherein a pressure compensation element is arranged at the at least one third opening. In particular, the housing may comprise at least two third openings, wherein one pressure compensation element is arranged at each of the at least two third openings. Thus, in an advantageous embodiment the sealed housing of the battery may be furthermore equipped with state of the art pressure compensation elements for pressure compensation during normal operation.

### Brief Description of Drawings

The embodiments together with the above-mentioned and other objects and advantages may best be understood from the following detailed description of the embodiments, but not restricted to the embodiments.
Fig. 1 shows a part of a housing of a battery, in particular of a traction battery of a motor vehicle, with a filter device for filtering a fluid stream, according to embodiments, in an isometric view from an outer side.
Fig. 2 shows the housing with the filter device according to Fig. 1 in a top view with sectional planes A-A and C-C indicated.
Fig. 3 is a sectional view of the housing with the filter device according to sectional plane A-A in Fig. 2.
Fig. 4 is a sectional view of the housing with the filter device according to sectional plane C-C in Fig. 2 with sectional plane D-D indicated.
Fig. 5 is a sectional view of the housing with the filter device according to sectional plane D-D in Fig. 4 with details X and Y of the filter device indicated.
Fig. 6 shows the detail X of the filter device according to Fig. 5.
Fig. 7 shows the detail Y of the filter device according to Fig. 5.
Fig. 8 shows the housing with the filter device according to Fig. 2 from an interior side.

### Description of Embodiments

In the drawings, like elements are referred to with equal reference numerals. The drawings are merely schematic representations, not intended to portray specific parameters of the embodiments. Moreover, the drawings are intended to depict only typical embodiments of the embodiments and therefore should not be considered as limiting the scope of the embodiments.

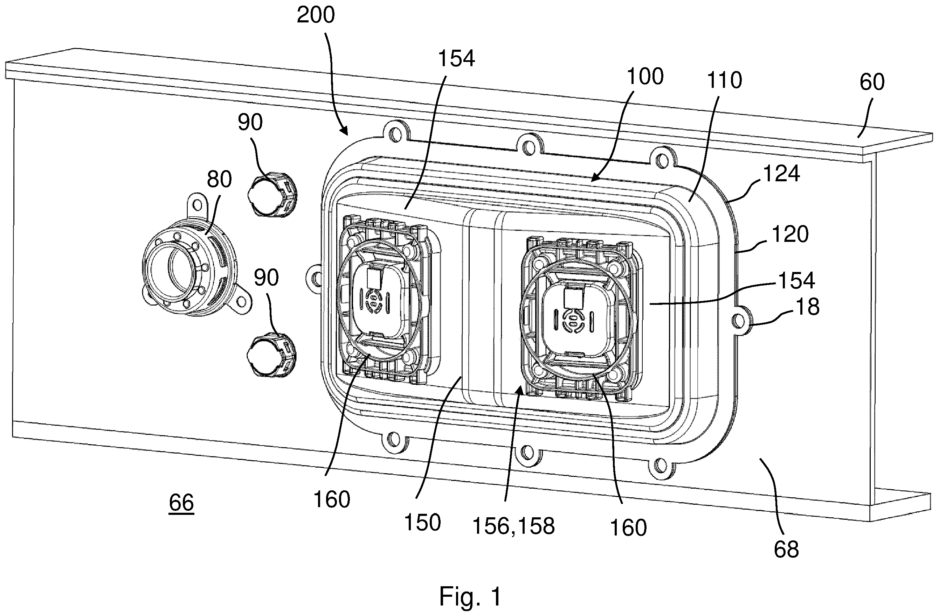

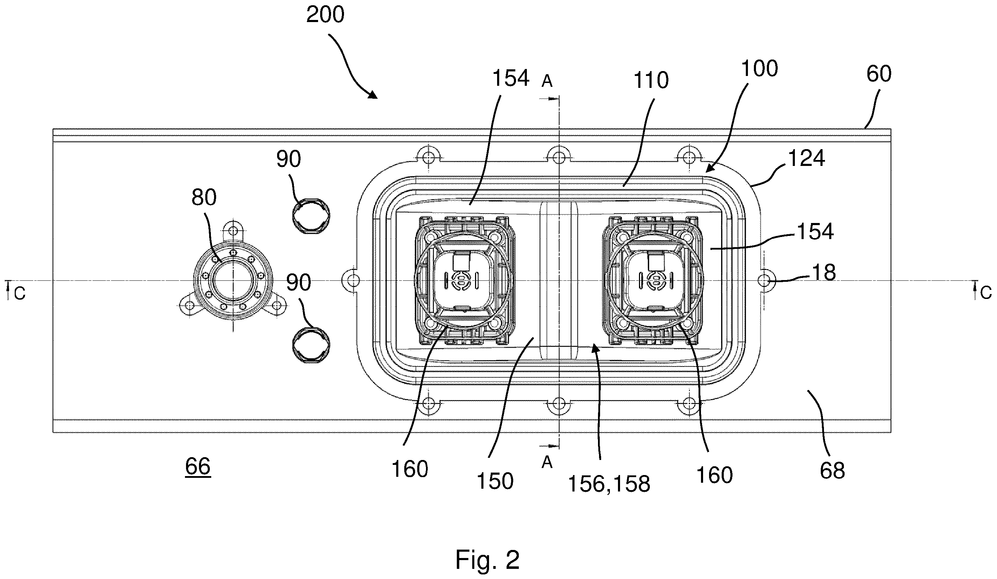

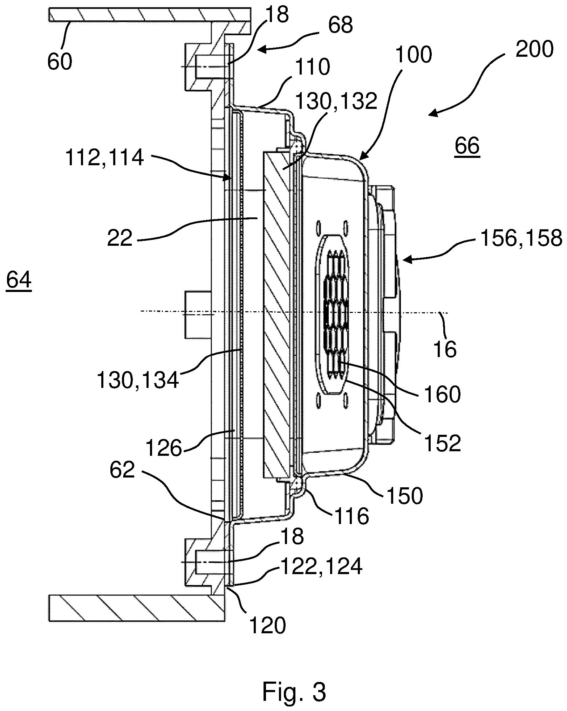

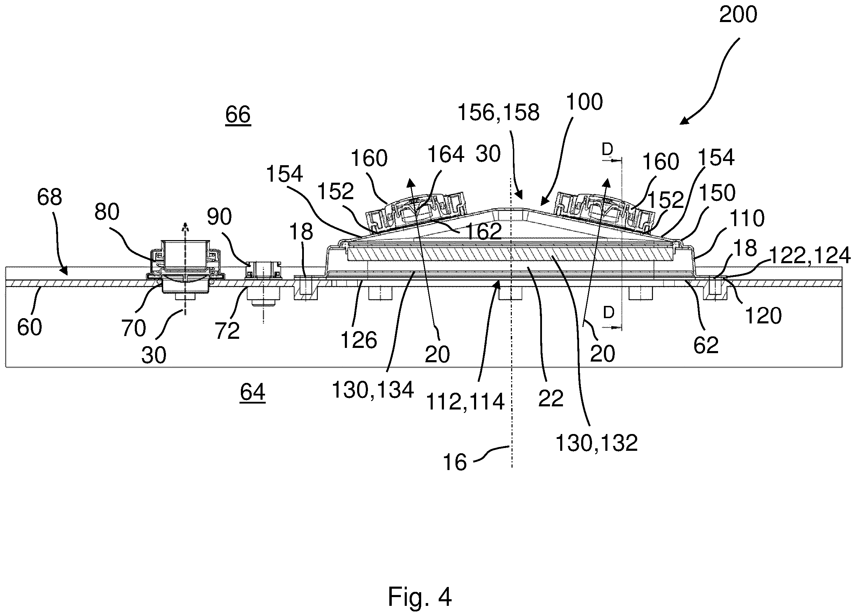

Fig. 1 depicts a part of a housing 60 of a battery, in particular of a traction battery of a motor vehicle, with a filter device 200 for filtering a fluid stream, according to embodiments, in an isometric view from an outer side 68., whereas in Fig. 2 the housing 60 with the filter device 200 according to Fig. 1 is depicted in a top view with sectional planes A-A and C-C indicated. Fig. 3 depicts a sectional view of the housing 60 with the filter device 200 according to sectional plane A-A in Fig. 2, whereas Fig. 4 depicts a sectional view of the housing 60 with the filter device 200 according to sectional plane C-C in Fig. 2 with sectional plane D-D indicated.

Only part of a wall of the housing 60 of the battery is shown. The housing 60 has at least one first opening 62 (to be seen in Fig. 3) for release of a fluid stream from inside the housing 60.

The filter device 200 comprises a cover element 100 with a base section 110 and a top section 150, having a fluid permeable fluid passage 22 for venting.

The cover element 100 has an open end 112 at a free end 114 of the base section 110 and a closed end 156 at a free end 158 of the top section 150 as is to be seen in Figs. 3 and 4.

The cover element 100 is mounted with the open end 112 in a substantially fluid tight manner to the first opening 62 on an outside 68 of the housing 60 in axial direction 16.

The base section 110 is connected to the top section 150, being integral with the top section 150.

As may be seen from Fig. 3, the cover element 100 comprises a filter arrangement 130 being arranged between the free end 114 of the base section 110 and the free end 158 of the top section 150.

The filter arrangement 130 comprises a filter element 132 and a particle separator 134, the particle separator 134 being arranged upstream of the filter element 132 in the intended fluid flow direction 20.

The top section 150 of the cover element 100 comprises two pressure relief valves 160 being arranged in an intended fluid flow direction 20 downstream of the filter arrangement 130.

Fig. 4 depicts the fluid flow direction 20 with arrows.

As is particularly to be seen from Figs. 1 and 4, the top section 150 of the cover element 100 is configured with two regions 154 being inclined against each other, wherein one pressure relief valve 160 is arranged at each region 154 of the top section 150. Thus, the intended fluid flow directions 20 of the two pressure relief valves 160 are inclined against each other.

The top section 150 has two fluid outlets 152, wherein the two pressure relief valves 160 are mounted. The two pressure relief valves 160 open the fluid passage 22 in the intended fluid flow direction 20 when a predetermined excess pressure in the housing 60 is reached or exceeded. For this purpose the pressure relief valves 160 comprise an airtight membrane 162 being configured to burst by interaction with a membrane rupture device 164 of the pressure relief valve 160 when the predetermined excess pressure in the housing 60 is reached or exceeded.

The base section 110 has a fluid inlet 126 in axial direction 16, including the particle separator 134 of the filter arrangement 130 arranged across the fluid inlet 126 through the base section 110. Screen openings 141 of the particle separator 134 engage across the fluid inlet 126 thus preventing particles from the venting gas entering inside the filter device 200 and possibly damaging or blocking the filter element 132.

The cover element 100 further accommodates a seat 122 for a circumferential extending sealing element 120. For this purpose the base section 110 has a circumferential rim 124 which is the seat 122 for a sealing element 120 to be arranged circumferentially between the rim 124 of the base section 110 and the housing 60 of the battery in its intended mounting state.

The filter device 200 is fixed to the housing 60 of the battery by a number of mounting elements 18, e.g. opening for screwing bolts.

The housing 60 further comprises a second opening 70, where an overpressure valve 80 is arranged. The overpressure valve 80 is configured to open at a higher pressure level than the pressure relief valve 160 of the cover element 100 and provides a bypass fluid flow path 30 from an interior 64 of the housing 60 to an environment 66. The bypass fluid flow path 30 bypasses at least the filter arrangement 130.

Further, the housing 60 comprises two third openings 72, where pressure compensation elements 90 are arranged.

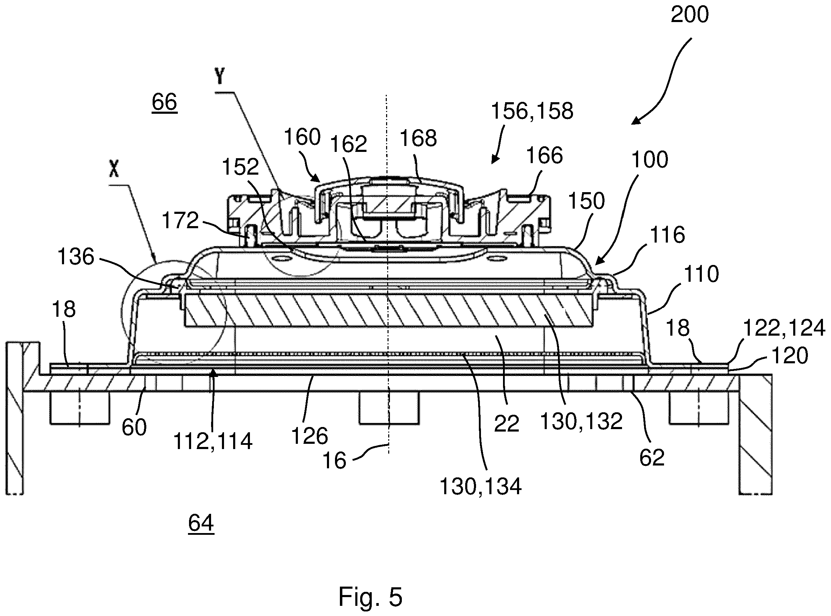

Fig. 5 depicts a sectional view of the housing 60 with the filter device 200 according to sectional plane D-D in Fig. 4 with details X and Y of the filter device 200 indicated.

A cross section of one of the pressure relief valves 160 is depicted showing how the pressure relief valve 160 is mounted to the fluid outlet 152 of the top section 150. The body 166 of the pressure relief valve 160 is sealed against the top section 150 by a circumferential sealing element 172. The pressure relief valve 160 exhibits a cover 168 which is fixed to the body 166. The membrane 162 is to be seen but not the membrane rupture device 164 because the cross section is not taken through the center of the pressure relief valve 160.

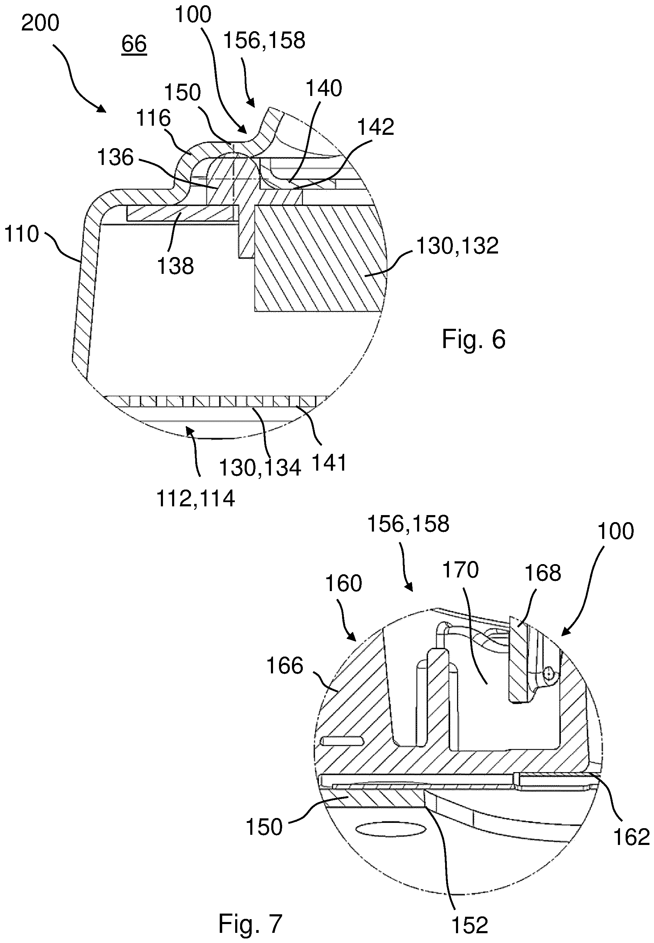

Sealing of the filter element 132 against the base section 110 is achieved by a circumferential sealing element 136 which is to be seen in more detail in Fig. 6, where the detail X of the filter device 200 according to Fig. 5 is depicted.

The cover element 100 has a shoulder 116 which directly or indirectly supports the sealing element 136 for sealing the filter element 132.

The base section 110 provides a support element 140, which provides a seat 142 for the filter element 132, wherein the filter element 132 is connected to the support element 140 by the sealing element 136 for stabilization. In other embodiments, the sealing element 136 may instead be any functional element of the filter element 132. Hereby, the sealing element 136 is arranged between a circumferential ring element 138 and the shoulder 116 compressing the sealing element 136.

Fig. 7 depicts the detail Y of the filter device 200 according to Fig. 5.

Here, part of the cross section of the pressure relief valve 160 is shown in more detail. The body 166 of the pressure relief valve 160 together with the cover 168 is configured with an outlet opening labyrinth 170 where the venting fluid streams when the membrane 162 is ruptured by the membrane rupture device 164.

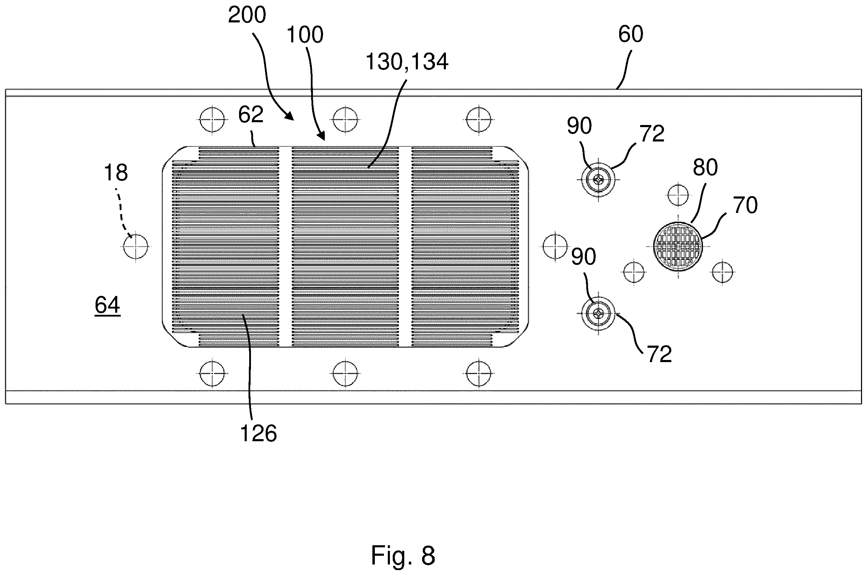

Fig. 8 depicts the housing 60 with the filter device 200 from an interior side.

Dimensions of the first opening 62 of the housing 60 for venting is to be seen establishing the fluid inlet 126 of the filter device 200.

The particle separator 134 of the filter arrangement 130 is to be seen through the first opening 62.

Sideways of the big first opening 62 for the filter device 200 the two openings 72 for the pressure compensation elements 90 and the opening 70 for the overpressure valve 80 are arranged.

Also, openings for the mounting elements 18 of the filter device 200 are arranged circumferential to the first opening 62.

### Reference Signs List

- 16: axial direction
- 18: mounting element
- 20: fluid flow direction
- 22: fluid passage
- 30: bypass fluid flow path
- 60: housing
- 62: first opening
- 64: interior
- 66: environment
- 68: outside
- 70: second opening
- 72: third opening
- 80: overpressure valve
- 90: pressure compensation element
- 100: cover element
- 110: base section
- 112: open end of the base section
- 114: free end of base section
- 116: shoulder
- 120: sealing element
- 122: seat
- 124: rim
- 126: fluid inlet
- 130: filter arrangement
- 132: filter element
- 134: particle separator
- 136: sealing element
- 138: ring element
- 140: support element
- 141: screen opening
- 142: seat
- 150: top section
- 152: fluid outlet
- 154: region
- 156: closed end of the top section
- 158: free end of the top section
- 160: pressure relief valve
- 162: membrane
- 164: membrane rupture device
- 166: body
- 168: cover
- 170: outlet opening labyrinth
- 172: sealing element
- 200: filter device

## Claims

1. A filter device (200) for filtering a fluid stream of a housing (60) of a battery, in particular of a traction battery of a motor vehicle, the filter device (200) comprising:
a cover element (100) comprising a base section (110), a top section (150), and a fluid permeable fluid passage (22) for venting, the cover element (100) comprising an open end (112) at a free end (114) of the base section (110) and a closed end (156) at a free end (158) of the top section (150), and the base section (110) being connected to the top section (150), in particular being integral with the top section (150);
a filter arrangement (130) arranged between the free end (114) of the base section (110) and the free end (158) of the top section (150); and
at least one pressure relief valve (160) arranged on the top section (150) and in an intended fluid flow direction (20) downstream of the filter arrangement (130),
wherein the filter arrangement (130) comprises a filter element (132) and a particle separator (134) arranged upstream of the filter element (132) in the intended fluid flow direction (20).

2. The filter device (200) according to claim 1, wherein the cover element (100) further comprises a shoulder (116) directly or indirectly supporting a sealing element (136) for sealing the filter element (132).

3. The filter device (200) according to claim 2, further comprising a support element (140) that comprises a seat (142) for the filter element (132),
wherein the filter element (132) is connected to the support element (140) by the sealing element (136) .

4. The filter device (200) according to claim 2, further comprising a circumferential ring element (138),
wherein the sealing element (136) is arranged between the circumferential ring element (138) and the shoulder (116) that compress the sealing element (136).

5. The filter device (200) according to any one of preceding claims, wherein the top section (150) comprises at least one fluid outlet (152), and
wherein the at least one pressure relief valve (160) is mounted at the at least one fluid outlet (152) and is configured to open the fluid passage (22) in the intended fluid flow direction (20) when a predetermined excess pressure in the housing (60) is reached or exceeded.

6. The filter device (200) according to claim 5, wherein the at least one pressure relief valve (160) comprises an airtight membrane (162) and a membrane rupture device (164), the airtight membrane (162) being configured to burst by interaction with the membrane rupture device (164) when the predetermined excess pressure in the housing (60) is reached or exceeded.

7. The filter device (200) according to any one of preceding claims, wherein the base section (110) comprises a fluid inlet (126) in an axial direction (16), and
wherein the particle separator (134) comprises screen openings (141) arranged across the fluid inlet (126).

8. The filter device (200) according to any one of preceding claims, wherein the at least one pressure relief valve (160) comprises two pressure relief valves (160), intended fluid flow directions (20) of the two pressure relief valves (160) being inclined against each other,
wherein the top section (150) comprises two regions (154) being inclined against each other, and
wherein one of the two pressure relief valves (160) is arranged at each of the two regions (154).

9. The filter device (200) according to any one of preceding claims, wherein the base section (110) comprises a circumferential rim (124) that is a seat (122) for a sealing element (120) to be arranged circumferentially between the circumferential rim (124) and the housing (60) of the battery in an intended mounting state of the filter device (200).

10. A housing (60) of a battery, in particular of a traction battery of a motor vehicle, the housing (60) comprising:
the filter device (200) according to any one of preceding claims; and
at least one first opening (62),
wherein the open end (112) of the cover element (100) of the filter device (200) is mounted in a substantially fluid tight manner to the at least one opening (62).

11. The housing (60) according to claim 10, wherein the cover element (100) is attached to an outside (68) of the housing (60).

12. The housing (60) according to claim 10 or 11, further comprising a second opening (70),
wherein an overpressure valve (80) is arranged at the second opening (70) and is configured to open at a higher pressure level than the at least one pressure relief valve (160) of the filter device (200) to provide a bypass fluid flow path (30) from an interior (64) of the housing (60) to an environment (66), the bypass fluid flow path (30) bypassing at least the filter arrangement (130).

13. The housing (60) according to any one of claims 10 to 12, further comprising at least one third opening (72),
wherein at least one pressure compensation element (90) is arranged at the at least one third opening (72).
